# EUROPÄISCHE PATENTSCHRIFT

(11) **EP 4 054 917 B1**
(45) Veröffentlichungstag und Bekanntmachung des Hinweises auf die Patenterteilung: **04.06.2025**
(21) Anmeldenummer: 20803766.3
(22) Anmeldetag: 04.11.2020
(51) Int. Cl.: B62D 1/10, B62D 5/04

(54) **ANORDNUNG EINER LENKVORRICHTUNG**
ARRANGEMENT OF A STEERING DEVICE
AGENCEMENT D'UN SYSTÈME DE DIRECTION

(30) Priorität: 08.11.2019 AT 509562019
(43) Veröffentlichungstag der Anmeldung: 14.09.2022
(73) Patentinhaber: Tochev, Ivan, 1050 Wien (AT); Neuhauser, Patrick, 1050 Wien (AT)
(72) Erfinder: Tochev, Ivan, 1050 Wien (AT); Neuhauser, Patrick, 1050 Wien (AT)
(74) Vertreter: Puchberger & Partner Patentanwälte
(86) Internationale Anmeldenummer: PCT/EP2020/080885
(87) Internationale Veröffentlichungsnummer: WO 2021/089583

(56) Entgegenhaltungen:
- EP-A1- 1 323 617
- WO-A1-2010/115707
- WO-A1-2018/197153
- DE-A1- 102006 003 430
- DE-A1- 3 420 358
- FR-A1- 2 896 472
- US-A- 5 072 628

## Beschreibung

Die Erfindung betrifft eine Anordnung einer Lenkvorrichtung, eine Lenkvorrichtung, ein Lenkrad und ein Fahrzeug gemäß den Oberbegriffen der unabhängigen Patentansprüche.

Aus dem Stand der Technik sind unterschiedliche Lenkvorrichtungen bekannt. Beispielsweise sind Lenkvorrichtungen bekannt, bei denen das herkömmliche Lenkrad mit einem Motor, wie beispielsweise einem Reibradmotor, in Reibkontakt ist, um das Fahrzeug zu lenken. Nachteilig an solchen Lenkvorrichtungen ist aber, dass diese viel Platz im Cockpit des Fahrzeugs benötigen. Da in den meisten Fahrzeugen der Platz in den Cockpits beengt ist, ist ein derartiger Einbau meist nicht, insbesondere aus komforttechnischen Gründen, sinnvoll. Überdies sind herkömmliche Lenkvorrichtungen meist untrennbar mit dem Fahrzeug und insbesondere mit dem Lenkrad des Fahrzeugs verbunden. Ein schnelles Aus- und Einbauen der Lenkvorrichtung ist daher nicht möglich, wodurch in jedes Fahrzeug eine eigene Lenkvorrichtung eingebaut werden muss. FR 2 896 472 offenbart die Merkmale des Oberbegriffs des Anspruchs 1.

Aufgabe der Erfindung ist es, die Nachteile des Standes der Technik zu überwinden. Insbesondere ist es Aufgabe der Erfindung, eine kompakte Lenkvorrichtung zu schaffen, in welcher eine Bedieneinheit integriert ist. Ferner soll die Lenkvorrichtung schnell und einfach in ein Fahrzeug einbaubar und aus einem Fahrzeug ausbaubar sein.

Die erfindungsgemäße Aufgabe wird insbesondere durch die Merkmale der unabhängigen Patentansprüche gelöst.

Die Erfindung betrifft insbesondere eine Anordnung einer Lenkvorrichtung an einer Lenkung eines Fahrzeuges, wobei die Lenkung einen starren Lenkungsteil und einen drehbaren Lenkungsteil, insbesondere eine Lenksäule, umfasst, wobei durch die Drehung des drehbaren Lenkungsteils die Stellung von mindestens einem Fahrzeugrad einstellbar ist, und wobei der drehbare Lenkungsteil relativ zu dem starren Lenkungsteil verdreht werden kann.

Erfindungsgemäß ist vorgesehen, dass die Lenkvorrichtung ein Lenkrad umfasst, dass die Lenkvorrichtung mit dem starren Lenkungsteil und dem drehbaren Lenkungsteil verbunden, insbesondere lösbar verbunden, ist, dass die Lenkvorrichtung einen zur Drehung des drehbaren Lenkungsteils eingerichteten Motor umfasst, dass das Lenkrad über ein Getriebe mit dem drehbaren Lenkungsteil gekoppelt ist, dass das Getriebe ein mit dem drehbaren Lenkungsteil drehverbundenes, insbesondere als Zahnrad ausgebildetes, erstes Maschinenelement umfasst, dass das Getriebe ein mit dem Lenkrad drehverbundenes, insbesondere als Zahnrad ausgebildetes, zweites Maschinenelement umfasst, dass das erste Maschinenelement mit dem zweiten Maschinenelement über ein, insbesondere als Zahnrad ausgebildetes, um eine Drehachse drehbar gelagertes drittes Maschinenelement gekoppelt ist, und dass die Drehachse des dritten Maschinenelements starr relativ zum starren Lenkungsteil angeordnet ist.

Im Rahmen der vorliegenden Erfindung kann unter einer Lenkvorrichtung insbesondere ein Lenkautomat, ein Lenkassistent und/oder eine Lenkhilfe verstanden werden. Mit anderen Worten kann die Lenkvorrichtung dazu eingerichtet sein, das Fahrzeug, insbesondere selbständig, zu lenken und/oder die Lenkbewegungen des Fahrzeugführers zu unterstützen.

Bei der Lenkung des Fahrzeuges kann es sich um eine herkömmliche Lenkung handeln, welche einen drehbaren Lenkungsteil, wie beispielsweise eine Lenksäule, umfasst. Bevorzugt ist der drehbare Lenkungsteil ein stangen- oder röhrenförmiger Träger, der am oberen Ende mit dem herkömmlichen Lenkrad verbindbar ist.

Bevorzugt ist durch die Bewegung, insbesondere die Drehung, des drehbaren Lenkungsteils die Stellung von mindestens einem Fahrzeugrad einstellbar und somit die Fahrtrichtung des Fahrzeuges beeinflussbar.

Gegebenenfalls wird die Bewegung des drehbaren Lenkungsteils auf das Lenkgestänge der Fahrzeugräder übertragen. Der drehbare Lenkungsteil kann in Fahrtrichtung vor dem Fahrersitz angeordnet sein und kann bevorzugt schräg von der Position des Lenkrades zum Lenkgestänge verlaufen.

Ferner soll die Lenkung einen starren Lenkungsteil umfassen, welcher bei der Drehung des drehbaren Lenkungsteils unbewegt ist. Mit anderen Worten ist gegebenenfalls der drehbare Lenkungsteil zur Einstellung von mindestens einer Fahrzeugradstellung drehbar, wobei der starre Lenkungsteil während der Drehung des drehbaren Lenkungsteils unbewegt ist. Der unbewegte Teil, im vorliegenden Fall der starre Lenkungsteil, soll somit unbeeinflusst von der Drehung des bewegten Teils, im vorliegenden Fall des drehbaren Lenkungsteils, sein, aber durch andere Bewegungen, beispielsweise durch das Fahren des Fahrzeugs mit dem Fahrzeugt bewegt werden.

Der starre Lenkungsteil soll unbeweglich, starr oder fix mit dem Fahrzeug, insbesondere mit dem Armaturenbrett, verbunden sein. Insbesondere weist der starre Lenkungsteil relativ zu dem Fahrzeug, insbesondere dem Armaturenbrett, keinen Freiheitsgrad auf. Gegebenenfalls ist der starre Lenkungsteil relativ zu dem Fahrzeug, insbesondere dem Armaturenbrett, unbewegt.

Ferner soll der drehbare Lenkungsteil relativ zu dem starren Lenkungsteil verdrehbar sein. Mit anderen Worten kann sich der drehbare Lenkungsteil unabhängig von dem starren Lenkungsteil drehen.

Die Lenkvorrichtung soll ein Lenkrad und einen Motor umfassen. Bevorzugt ist das Lenkrad ein Integralteil der Lenkvorrichtung. Durch den Antrieb des Motors ist gegebenenfalls der drehbare Lenkungsteil verdrehbar. Das Lenkrad der Lenkvorrichtung soll mit dem drehbaren Lenkungsteil verbunden oder verbindbar sein, sodass durch die Drehung des Lenkrades die Stellung von mindestens einem Fahrzeugrad einstellbar ist.

Insbesondere sind mindestens ein Teil der Lenkvorrichtung mit dem starren Lenkungsteil und mindestens ein anderer Teil der Lenkvorrichtung mit dem drehbaren Lenkungsteil verbunden. Mit anderen Worten kann die Lenkvorrichtung zugleich sowohl mit dem starren als auch mit dem drehbaren Lenkungsteil verbunden sein, wenn die Lenkvorrichtung mit der Lenkung verbunden ist.

Bevorzugt sind die Teile der Lenkvorrichtung mit dem starren Lenkungsteil verbunden, die unabhängig von der Drehung des Lenkrads sein sollen. Bevorzugt sind die Teile der Lenkvorrichtung mit dem drehbaren Lenkungsteil verbunden, die durch die Drehung des drehbaren Lenkungsteils und/oder des Lenkrades verdreht werden.

Das erste Maschinenelement, insbesondere ein erstes Zahnrad oder ein erster Zahnkranz, soll mit dem drehbaren Lenkungsteil, insbesondere lösbar, verbunden sein. Insbesondere kann das erste Maschinenelement dazu eingerichtet sein kraft-, stoff- und/oder formschlüssig mit dem drehbaren Lenkungsteil verbunden zu werden.

Das zweite Maschinenelement, insbesondere ein zweites Zahnrad oder ein zweiter Zahnkranz, soll mit dem Lenkrad verbunden oder verbindbar sein. Insbesondere kann das zweite Maschinenelement dazu eingerichtet sein kraft-, stoff- und/oder formschlüssig mit dem Lenkrad verbunden zu werden.

Das erste Maschinenelement kann, insbesondere ausschließlich, über das dritte Maschinenelement, bevorzugt über den Motor, mit dem zweiten Maschinenelement verbunden oder verbindbar sein.

Erfindungsgemäß ist das dritte Maschinenelement mit dem starren Lenkungsteil verbunden oder verbindbar. Insbesondere umfasst ein Teil, insbesondere der Motor, das dritte Maschinenelement, wobei dieser Teil, insbesondere der Motor, mit dem starren Lenkungsteil verbunden oder verbindbar ist. Dadurch kann die Drehachse des dritten Maschinenelements unbeeinflusst von einer Drehung des Lenkrads sein. Die Position der Drehachse des dritten Maschinenelements kann somit relativ zu dem starren Lenkungsteil unbewegt sein.

In allen Ausführungsformen kann vorgesehen sein, dass das dritte Maschinenelement als Teil des Motors ausgebildet ist, und dass das dritte Maschinenelement das Lenkrad mit dem drehbaren Lenkungsteil verbindet.

Insbesondere steht das Lenkrad, bevorzugt ausschließlich, über das dritte Maschinenelement, insbesondere den Motor, mit dem drehbaren Lenkungsteil in Kontakt. Das dritte Maschinenelement kann als ein Umformerelement, ein Getrieberad, ein Zahnrad, ein Kegelrad, eine Motorwelle, ein Motorritzel oder dergleichen ausgebildet sein.

Erfindungsgemäß sollen das erste und das zweite Maschinenelement über mehrere Maschinenelemente verbunden sein, wobei die Drehachsen dieser mehreren Maschinenelemente starr relativ zum starren Lenkungsteil angeordnet sind.

Gegebenenfalls können das Lenkrad über das zweite Maschinenelement mit dem dritten Maschinenelement, insbesondere dem Motor, und das dritte Maschinenelement, insbesondere der Motor, über das erste Maschinenelement mit dem drehbaren Lenkungsteil, bevorzugt formschlüssig, in Eingriff sein. Dadurch ist gegebenenfalls eine Drehbewegung des Lenkrades auf das dritte Maschinenelement und die Drehbewegung des dritten Maschinenelements auf das drehbare Lenkungsteil übertragbar.

Es kann vorgesehen sein, dass eine Drehung des Lenkrades über das dritte Maschinenelement auf den drehbaren Lenkungsteil und zugleich auf den Motor übertragbar ist. Falls das dritte Maschinenelement als Motor ausgebildet ist, kann eine Drehung des Lenkrades über den Motor auf den drehbaren Lenkungsteil übertragbar sein.

Bevorzugt kann vorgesehen sein, dass eine Drehung des Motors sowohl auf den drehbaren Lenkungsteil als auch auf das Lenkrad übertragbar ist.

Es kann vorgesehen sein, dass der Motor, insbesondere ausschließlich, mit dem ersten oder zweiten Maschinenelement verbunden ist. Es kann vorgesehen sein, dass nur ein Maschinenelement von dem Motor angetrieben wird.

Die Lenkvorrichtung kann dazu eingerichtet sein, in ein herkömmliches Fahrzeug eingebaut, insbesondere an eine herkömmliche Lenkung angebaut, zu werden. Dadurch kann es möglich sein, ein herkömmliches Fahrzeug mit einer erfindungsgemäßen Lenkvorrichtung auszustatten bzw. die erfindungsgemäße Lenkvorrichtung in ein herkömmliches Fahrzeug nachzurüsten.

Erfindungsgemäß ist vorgesehen, dass das erste Maschinenelement und das zweite Maschinenelement, konzentrisch angeordnet sind, dass das erste Maschinenelement im Wesentlichen dem zweiten Maschinenelement entspricht, dass die Drehachsen des ersten Maschinenelements und des zweiten Maschinenelements im Wesentlichen der Drehachse des drehbaren Lenkungsteils entsprechen, und dass sich das erste Maschinenelement und das zweite Maschinenelement im Wesentlichen orthogonal zu der Drehachse des drehbaren Lenkungsteils erstrecken.

Bevorzugt ist das dritte Maschinenelement zur Übertragung von Kraft von dem ersten auf das zweite Maschinenelement eingerichtet.

Gegebenenfalls sind das erste Maschinenelement und das zweite Maschinenelement im Wesentlichen identisch. Ferner können das ersten Maschinenelement und das zweite Maschinenelement konzentrisch angeordnet sein und im Wesentlichen dieselbe Drehachse aufweisen. Insbesondere können die Drehachsen des ersten Maschinenelements und des zweiten Maschinenelements im Wesentlichen parallel zu der Drehachse des drehbaren Lenkungsteils verlaufen. Bevorzugt entsprechen die Drehachsen des ersten Maschinenelements und des zweiten Maschinenelements im Wesentlichen der Drehachse des drehbaren Lenkungsteils.

Insbesondere sind das ersten Maschinenelement und das zweite Maschinenelement als Zahnräder oder Zahnkränze ausgebildet. Die Deckflächen dieser beiden Maschinenelemente können sich orthogonal in Bezug auf die Drehachse des drehbaren Lenkungsteils erstrecken.

Insbesondere ist vorgesehen, dass die Lenkvorrichtung und/oder das Lenkrad im Wesentlichen orthogonal zu der Drehachse des drehbaren Lenkungsteils angeordnet ist oder sind.

Im Rahmen der vorliegenden Erfindung kann die Drehachse des drehbaren Lenkungsteils im Wesentlichen parallel zur Längserstreckung des drehbaren Lenkungsteils verlaufen.

Zur besseren Verständlichkeit können im Rahmen der vorliegenden Erfindung unter den beiden Maschinenelementen das erste und das zweite Maschinenelement verstanden werden.

Gegebenenfalls ist vorgesehen, dass die Lenkvorrichtung ein Lenkvorrichtungsgehäuse umfasst, dass das Lenkvorrichtungsgehäuse mit dem starren Lenkungsteil verbunden, insbesondere lösbar verbunden, ist, und dass sich das Lenkvorrichtungsgehäuse zumindest teilweise zwischen dem ersten und dem zweiten Maschinenelement erstreckt.

Zwischen dem ersten Maschinenelement und dem zweiten Maschinenelement kann zumindest ein Teil der Lenkvorrichtung angeordnet sein, wobei dieser Teil insbesondere mit dem starren Lenkungsteil verbunden ist. Bevorzugt ist zumindest ein Teil, insbesondere die Bodenplatte, des Lenkvorrichtungsgehäuses zwischen dem ersten Maschinenelement und dem zweiten Maschinenelement vorgesehen.

Das erste Maschinenelement kann innerhalb des Lenkvorrichtungsgehäuses angeordnet sein und/oder von dem Lenkvorrichtungsgehäuse umgeben sein. Insbesondere ist das erste Maschinenelement form- und/oder kraftschlüssig mit dem drehbaren Lenkungsteil verbunden.

Der drehbare Lenkungsteil kann innerhalb des Lenkvorrichtungsgehäuses enden. Bevorzugt ist der freie Wellenzapfen des drehbaren Lenkungsteils von dem Lenkvorrichtungsgehäuse umgeben. Bevorzugt durchbricht der drehbare Lenkungsteil, insbesondere ausschließlich, eine Seite des Lenkvorrichtungsgehäuses.

Das zweite Maschinenelement kann außerhalb des Lenkvorrichtungsgehäuses angeordnet sein. Insbesondere ist das zweite Maschinenelement form-, kraft- und/oder stoffschlüssig mit dem Lenkrad verbunden. Gegebenenfalls ist das Lenkrad und das zweite Maschinenelement als ein Teil, insbesondere einstückig, ausgebildet.

Gegebenenfalls ist das erste Maschinenelement, insbesondere ausschließlich, über das dritte Maschinenelement, insbesondere den Motor, mit dem zweiten Maschinenelement, insbesondere form- und/oder kraftschlüssig, verbunden.

In allen Ausführungsformen kann vorgesehen sein, dass das dritte Maschinenelement und der Motor mit dem ersten und/oder den zweiten Maschinenelement verbunden sind und/oder in Eingriff sind.

Bevorzugt sind das erste Maschinenelement und das zweite Maschinenelement, insbesondere ausschließlich, über das Motorritzel des Motors, miteinander verbunden.

Bevorzugt ist vorgesehen, dass die Position des Lenkvorrichtungsgehäuses unabhängig von der Stellung und/oder der Drehung des Lenkrads und/oder des drehbaren Lenkungsteils ist. Das Lenkrad kann somit relativ zu dem Lenkvorrichtungsgehäuse verdreht werden. Bevorzugt bleibt das Lenkvorrichtungsgehäuse unbewegt, wenn das Lenkrad und/oder der drehbare Lenkungsteil verdreht werden.

Gegebenenfalls ist vorgesehen, dass das Lenkrad der Lenkvorrichtung ausschließlich mit dem drehbaren Lenkungsteil verbunden, insbesondere lösbar verbunden, ist.

Gegebenenfalls ist vorgesehen, dass das Lenkvorrichtungsgehäuse ausschließlich mit dem starren Lenkungsteil verbunden, insbesondere lösbar verbunden, ist.

Gegebenenfalls ist vorgesehen, dass das dritte Maschinenelement, insbesondere die Motorwelle oder das Motorritzel, durch das Lenkvorrichtungsgehäuse ragt und das erste und das zweite Maschinenelement verbindet.

Gegebenenfalls ist vorgesehen, dass das Lenkvorrichtungsgehäuse, insbesondere die Bodenplatte des Lenkvorrichtungsgehäuses, bevorzugt ausschließlich, eine Öffnung für das dritte Maschinenelement, insbesondere das Motorritzel, und/oder eine Öffnung für die zur Verbindung der Lenkvorrichtung mit dem Fahrzeug eingerichteten Leitungen aufweist.

Im Rahmen der vorliegenden Erfindung kann unter einer Leitung ein Gegenstand zum Transport von elektrischer Energie oder ein Gegenstand zur Signalübertragung verstanden werden.

Gegebenenfalls ist vorgesehen, dass die Drehachse des dritten Maschinenelements im Wesentlichen parallel oder orthogonal zu der Drehachse des drehbaren Lenkungsteils verläuft, und/oder dass die Drehachse des Lenkrades im Wesentlichen der Drehachse des drehbaren Lenkungsteils entspricht.

Bevorzugt verläuft die Drehachse des dritten Maschinenelements im Wesentlichen parallel und beabstandet zu der Drehachse des drehbaren Lenkungsteils.

Gegebenenfalls ist vorgesehen, dass die Lenkvorrichtung mindestens einen Lenkvorrichtungsteil, wie insbesondere mindestens einen Lenksensor, mindestens eine Antenne, mindestens eine Steuervorrichtung und/oder mindestens eine Batterie, umfasst, und dass der mindestens eine Lenkvorrichtungsteil, insbesondere ausschließlich, mit dem Lenkvorrichtungsgehäuse verbunden ist.

Insbesondere sind die für die Funktion der Lenkvorrichtung notwendigen mechanischen und/oder elektronischen Lenkvorrichtungsteile an der Lenkvorrichtung, bevorzugt an dem Lenkvorrichtungsgehäuse, angeordnet. Die Lenkvorrichtungsteile, die an dem Lenkvorrichtungsgehäuse angeordnet sind können, unbewegt bleiben, wenn das Lenkrad und/oder der drehbare Lenkungsteil verdreht wird oder werden.

Zum besseren Empfang kann die GNSS-/GPS-Antenne am Fahrzeug selbst, insbesondere am Fahrzeugdach oder der Fahrzeugkarosserie, angeordnet sein. Bevorzugt ist vorgesehen, dass die außerhalb der Lenkvorrichtung angeordneten Teile mit der Lenkvorrichtung, insbesondere drahtlos, verbindbar sind.

Die Steuervorrichtung der Lenkvorrichtung kann als Computer ausgebildet sein. Insbesondere ist die Steuervorrichtung zur Steuerung des Motors, bevorzugt zur Lenkung des Fahrzeugs, eingerichtet. Gegebenenfalls kann die Steuereinrichtung Standortdaten, insbesondere drahtlos, empfangen und auswerten. Gegebenenfalls kann die Steuervorrichtung mit mindestens einer Bedienungsvorrichtung verbunden sein und die über die Bedienungsvorrichtung eingegebenen Signale empfangen und auswerten.

Gegebenenfalls ist vorgesehen, dass der drehbare Lenkungsteil von dem starren Lenkungsteil umgeben ist, und/oder dass sich der starre Lenkungsteil im Wesentlichen parallel zur Drehachse des drehbaren Lenkungsteils erstreckt, und/oder dass der drehbare Lenkungsteil, insbesondere die Lenksäule, in dem starren Lenkungsteil angeordnet ist.

Bevorzugt ist der drehbare Lenkungsteil als Lenkwelle ausgebildet, welche mit mindestens einem Fahrzeugrad verbunden ist. Bevorzugt ist der starre Lenkungsteil als ein Rohr oder eine Hülse, wobei in dem Rohr oder der Hülse die Lenkwelle angeordnet ist, ausgebildet.

Gegebenenfalls ist vorgesehen, dass die Lenkvorrichtung mindestens eine Bedienungsvorrichtung, wie insbesondere einen Touchscreen und/oder einen Knopf, umfasst, dass die mindestens eine Bedienungsvorrichtung, insbesondere über das Lenkvorrichtungsgehäuse, mit dem starren Lenkungsteil verbunden ist, wodurch die mindestens eine Bedienungsvorrichtung während der Drehung des Lenkrades und des drehbaren Lenkungsteils unbewegt ist, dass gegebenenfalls die mindestens eine Bedienungsvorrichtung im Wesentlichen orthogonal zu der Drehachse des drehbaren Lenkungsteils angeordnet ist, und dass die mindestens eine Bedienungsvorrichtung zur Bedienung der Lenkvorrichtung und/oder des Fahrzeugs eingerichtet ist.

Die Lenkvorrichtung kann mindestens eine Bedienungsvorrichtung umfassen. Damit die mindestens eine Bedienungsvorrichtung auch während der Drehung des Lenkrades und/oder des drehbaren Lenkungsteils bedienbar ist, kann die mindestens eine Bedienungsvorrichtung mit dem starren Lenkungsteil verbunden sein. Dadurch kann die Drehung des Lenkrades und/oder des drehbaren Lenkungsteils von einer gegebenenfalls stattfindenden Bewegung der mindestens einen Bedienungsvorrichtung entkoppelt werden.

Mit anderen Worten kann die Position der mindestens einen Bedienungsvorrichtung und/oder des Lenkvorrichtungsgehäuses unverändert bleiben, während das Lenkrad und/oder der drehbare Lenkungsteil gedreht werden oder wird.

Ferner kann die mindestens eine Bedienungsvorrichtung zur Bedienung durch den Fahrzeugführer eingerichtet sein. Die Bedienvorrichtung kann oberhalb des Endes des drehbaren Lenkungsteils angeordnet sein.

Das Lenkvorrichtungsgehäuse und die mindestens eine Bedienungsvorrichtung sind insbesondere in der Mitte des Lenkrades angeordnet. Die mindestens eine Bedienungsvorrichtung kann ein beispielsweise ein Not-Aus-Schalter, ein Touchscreen, ein Display, ein Schalter, ein Knopf und/oder dergleichen sein.

Über die mindestens eine Bedienungsvorrichtung können das Fahrzeug und/oder die Lenkvorrichtung, insbesondere die mindestens eine Steuervorrichtung, gesteuert werden.

Es kann aber auch vorgesehen sein, dass die Lenkvorrichtung zur Bedienung durch ein Mobilgerät, wie insbesondere ein Smartphone oder ein Tablet, eingerichtet ist.

Gegebenenfalls ist vorgesehen, dass die Lenkvorrichtung abnehmbar ausgebildet ist, wodurch eine Entfernung der Lenkvorrichtung von der Lenkung, insbesondere von dem starren und dem drehbaren Lenkungsteil, möglich ist.

Bevorzugt ist die Lenkvorrichtung dazu eingerichtet, schnell und einfach aus dem Fahrzeug ein- und ausgebaut zu werden.

Die Lenkvorrichtung kann dazu eingerichtet sein, von der Lenkung, insbesondere dem starren und dem drehbaren Lenkungsteilen, entfernt zu werden. Beispielsweise kann es dadurch möglich sein, die Lenkvorrichtung einfach durch ein herkömmliches Lenkrad zu ersetzen.

Zur Einhaltung gesetzlicher Vorschriften kann die Lenkvorrichtung aus dem Fahrzeug ausgebaut und ein normales Lenkrad in das Fahrzeug eingebaut werden. Somit kann mit dem Fahrzeug eine normale Straße befahren werden. Abseits der normalen Straßen, beispielweise auf einem Privatgrund, kann das normale Lenkrad durch die erfindungsgemäße Lenkvorrichtung ersetzt werden.

Ferner kann es durch den schnellen und einfachen Ein- und Ausbau möglich sein, eine Lenkvorrichtung für mehrere Fahrzeuge zu verwenden. Des Weiteren kann durch die Entfernung der Lenkvorrichtung ein Diebstahl der Lenkvorrichtung aus dem Fahrzeug verhindert werden.

Gegebenenfalls ist vorgesehen, dass an dem starren Lenkungsteil kraft-, form- und/oder stoffschlüssig eine erste Verbindungsvorrichtung, insbesondere eine Schnellkupplung, angeordnet ist, und dass das Lenkvorrichtungsgehäuse über die erste Verbindungsvorrichtung mit dem starren Lenkungsteil verbunden, insbesondere lösbar verbunden, ist.

Gegebenenfalls ist vorgesehen, dass an dem drehbaren Lenkungsteil kraft-, form- und/oder stoffschlüssig eine zweite Verbindungsvorrichtung, insbesondere ein Zahnrad, angeordnet ist, und dass das erste Maschinenelement, das dritte Maschinenelement, das zweite Maschinenelement und/oder das Lenkrad über die zweite Verbindungsvorrichtung mit dem drehbaren Lenkungsteil verbunden, insbesondere lösbar verbunden, ist oder sind.

Die Lenkvorrichtung kann einfach und schnell von der ersten und/oder zweiten Verbindungsvorrichtung trennbar sein.

Die erste Verbindungsvorrichtung, insbesondere eine Schnellkupplung, kann an dem starren Lenkungsteil kraft-, form- und/oder stoffschlüssig angeordnet sein.

Bevorzugt ist die erste Verbindungsvorrichtung zur Verbindung mit dem Lenkvorrichtungsgehäuse eingerichtet. Insbesondere kann durch die erste Verbindungsvorrichtung das Lenkvorrichtungsgehäuse form- und/oder kraftschlüssig mit dem starren Lenkungsteil verbunden werden. Gegebenenfalls ist das Lenkvorrichtungsgehäuse zu der ersten Verbindungsvorrichtung freiheitsgradlos, wenn die Lenkvorrichtung mit der ersten Verbindungsvorrichtung verbunden ist.

Die erste Verbindungsvorrichtung kann von dem Lenkvorrichtungsgehäuse umgeben und/oder innerhalb des Lenkvorrichtungsgehäuses angeordnet sein.

Die zweite Verbindungsvorrichtung, insbesondere ein Zahnrad, kann an dem drehbaren Lenkungsteil angeordnet sein. Bevorzugt ist die zweite Verbindungsvorrichtung zur Verbindung mit dem ersten Maschinenelement eingerichtet. Insbesondere kann durch die zweite Verbindungsvorrichtung das erste Maschinenelement formschlüssig mit dem drehbaren Lenkungsteil verbunden werden.

Die zweite Verbindungsvorrichtung kann außerhalb des Lenkvorrichtungsgehäuses angeordnet sein.

Gegebenenfalls weist das erste Maschinenelement eine Aufnahmeöffnung auf.

Gegebenenfalls ist das erste Maschinenelement mit einem weiteren Lenkvorrichtungsteil, insbesondere einer Verbindungsplatte, verbunden, wobei der weitere Lenkvorrichtungsteil eine Aufnahmeöffnung aufweist. Die Aufnahmeöffnung ist bevorzugt zur formschlüssigen Aufnahme der zweiten Verbindungsvorrichtung eingerichtet.

Gegebenenfalls ist das erste Maschinenelement zu der zweiten Verbindungsvorrichtung freiheitsgradlos, wenn die Lenkvorrichtung mit der zweiten Verbindungsvorrichtung verbunden ist.

Bevorzugt ist die Lenkvorrichtung zugleich, insbesondere über die erste Verbindungsvorrichtung, mit dem starren Lenkungsteil und, insbesondere über die zweite Verbindungsvorrichtung, mit dem drehbaren Lenkungsteil verbunden.

Gegebenenfalls ist vorgesehen, dass die Lenkvorrichtung über ein Verbindungselement, insbesondere einen Stecker, mit dem Fahrzeug, einer Batterie und/oder einer GNSS-/GPS-Empfangsvorrichtung verbunden, insbesondere lösbar verbunden, ist, und dass die mindestens eine zu dem Verbindungselement führende Leitung mit dem Lenkvorrichtungsgehäuse und gegebenenfalls mit der ersten Verbindungsvorrichtung verbunden ist, wodurch die mindestens eine Leitung während der Drehung des Lenkrades und des drehbaren Lenkungsteils unbewegt ist.

Dadurch können die Leitungen gegebenenfalls unabhängig von der Drehung des Lenkrades und/oder des drehbaren Lenkungsteils sein.

Es kann vorgesehen sein, dass die Lenkvorrichtung selbst eine Batterie und/oder eine GNSS/GPS-Empfangsvorrichtung umfasst. Dadurch kann gegebenenfalls ein Verbindungselement, wie ein Stecker, entfallen.

Insbesondere kann die Lenkvorrichtung komplett unabhängig von dem Fahrzeug, insbesondere der Fahrzeugelektronik, sein.

Gegebenenfalls ist vorgesehen, dass das Fahrzeug eine landwirtschaftliche Maschine, wie insbesondere ein Traktor, ein Mähdrescher ein Frontlader oder dergleichen, ist.

Insbesondere betrifft die Erfindung eine Lenkvorrichtung, wobei die Lenkvorrichtung zur Verwendung in der erfindungsgemäßen Anordnung eingerichtet ist.

Insbesondere betrifft die Erfindung ein Lenkrad, wobei das Lenkrad zur Verbindung mit dem starren Lenkungsteil, insbesondere der zweiten Verbindungsvorrichtung, der erfindungsgemäßen Anordnung eingerichtet ist.

Insbesondere betrifft die Erfindung ein Fahrzeug, wobei das Fahrzeug eine erfindungsgemäße Anordnung umfasst.

Weitere erfindungsgemäße Merkmale ergeben sich gegebenenfalls aus den Ansprüchen, der Beschreibung der Ausführungsbeispiele und den Figuren.

Die Erfindung wird nun am Beispiel exemplarischer, nicht ausschließlicher und/oder nicht einschränkender Ausführungsbeispiele weiter erläutert.
Fig. 1a und 1b zeigen schematische grafische dreidimensionale Darstellungen einer ersten Ausführungsform der erfindungsgemäßen Anordnung, und
Fig. 2 zeigt eine schematische grafische Schnittdarstellung der ersten Ausführungsform entlang der Schnittebene.

Wenn nicht anders angegeben, so entsprechen die Bezugszeichen folgenden Komponenten:
Lenkvorrichtung 1, Lenkrad 2, Motor 3, Lenkvorrichtungsgehäuse 4, zweite Verbindungsvorrichtung 5, drehbarer Lenkungsteil 6, starrer Lenkungsteil 7, erstes Maschinenelement 8, zweites Maschinenelement 9, Schnittebene 10, Motorritzel 11, erste Verbindungsvorrichtung 12, Aufnahmeöffnung 13, Drehachse des dritten Maschinenelements 14, Drehachse des Lenkrades 15, Drehachse des drehbaren Lenkungsteils 16, Bedienungsvorrichtung 17, Getriebe 18 und drittes Maschinenelement 19.

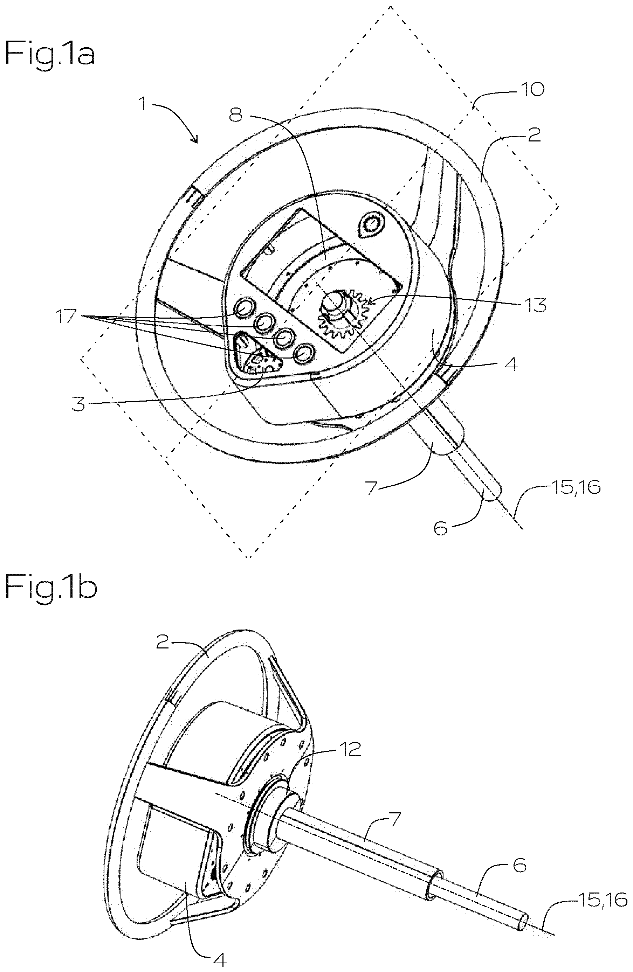

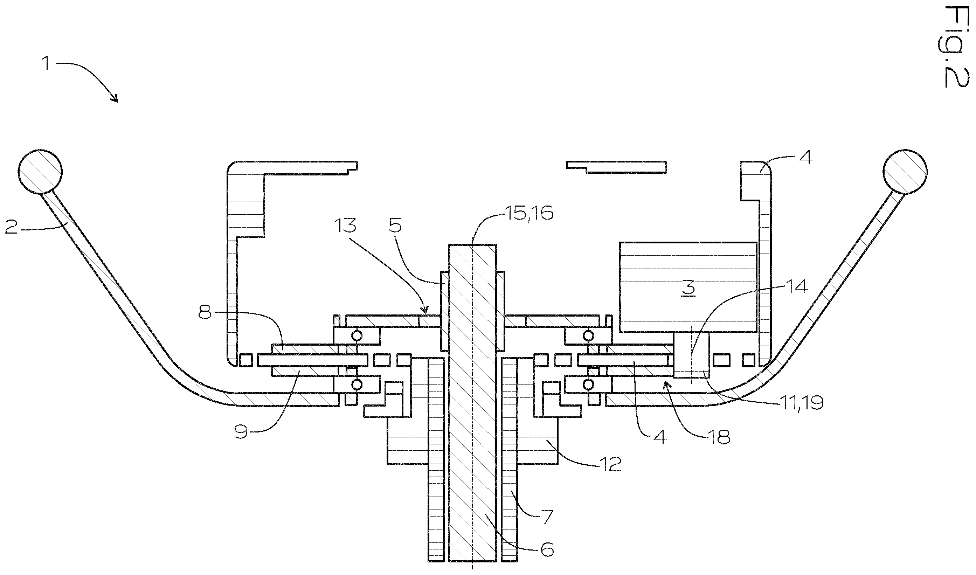

Die Figuren 1a, 1b und 2 zeigen schematische grafische Darstellungen der ersten Ausführungsform der erfindungsgemäßen Anordnung. Zur besseren Ersichtlichkeit sind die von der Drehung des Lenkrades 2 unbeeinflussten Teile gerade schraffiert und die Teile, welche durch eine Drehung des Lenkrades 2, verdreht werden, schräg schraffiert.

Die Lenkvorrichtung 1 ist zur Anordnung an einer Lenkung eines Fahrzeuges eingerichtet. In dieser Ausführungsform handelt es sich bei dem Fahrzeug um ein landwirtschaftliches Fahrzeug, wie z.B. einen Traktor.

Die Lenkung umfasst einen drehbaren Lenkungsteil 6 und einen starren Lenkungsteil 7. Über die Drehung des drehbaren Lenkungsteils 6 ist die Stellung von mindestens einem Fahrzeugrad einstellbar, wodurch die Fahrtrichtung des Fahrzeuges beeinflussbar ist. Der starre Lenkungsteil 7 ist unabhängig von der Drehung des drehbaren Lenkungsteils 6.

Gemäß dieser Ausführungsform ist der drehbare Lenkungsteil 6 als Lenkwelle und der starre Lenkungsteil 7 als ein Rohr ausgebildet, in welchem die Lenkwelle angeordnet ist, ausgebildet.

Die Lenkvorrichtung 1 umfasst ein Lenkrad 2, einen Motor 3, ein Getriebe 18 und ein Lenkvorrichtungsgehäuse 4. Die Lenkvorrichtung 1 ist zur mittigen Anordnung innerhalb des Lenkrades 2 ausgebildet.

Innerhalb des Lenkvorrichtungsgehäuses 4 ist ein erstes Maschinenelement 8, insbesondere ein erster Zahnkranz, angeordnet. Das erste Maschinenelement 8 ist formschlüssig mit dem drehbaren Lenkungsteil verbunden.

Außerhalb des Lenkvorrichtungsgehäuses 4 ist ein zweites Maschinenelement 9, insbesondere ein zweiter Zahnkranz, angeordnet. Das zweite Maschinenelement 9 ist form-, kraft- und/oder stoffschlüssig mit dem Lenkrad 2 verbunden.

Das erste Maschinenelement 8 und das zweite Maschinenelement 9 sind im Wesentlich identisch und konzentrisch angeordnet. Mit anderen Worten entsprechen die Drehachsen dieser beiden Maschinenelemente 8, 9 im Wesentlichen einander. Ferner erstrecken sich diese beiden Maschinenelemente 8, 9 im Wesentlichen orthogonal zu der Drehachse des drehbaren Lenkungsteils 16.

Zwischen dem ersten Maschinenelement 8 und dem zweiten Maschinenelement 9 erstreckt sich zumindest ein Teil des Lenkvorrichtungsgehäuses 4.

Das erste 8 und das zweite Maschinenelement 9 stehen in dieser Ausführungsform ausschließlich über das dritte Maschinenelement 19 miteinander in Kontakt. Gemäß dieser Ausführungsform ist das dritte Maschinenelement 19 als Motorritzel 11 des Motors 3 ausgebildet.

Gemäß dieser Ausführungsform verlaufen die Drehachse des dritten Maschinenelements 14 und die Drehachse des Lenkrades 15 im Wesentlichen parallel zu der Drehachse des drehbaren Lenkungsteils 16.

Einerseits ist eine Drehung des Lenkrades 2 über das zweite Maschinenelement 9 auf das Motorritzel 11 und über das Motorritzel 11 auf das erste Maschinenelement 8 und somit auf den drehbaren Lenkungsteil 6 übertragbar.

Andererseits ist aber auch eine Drehung des Motorritzels 11 über das zweite Maschinenelement 9 auf das Lenkrad 2 und über das erste Maschinenelement 8 auf den drehbaren Lenkungsteil 6 übertragbar.

Das Lenkrad 2 ist über das erste Maschinenelement 8, das zweite Maschinenelement 9, das dritte Maschinenelement 19, nämlich das Motorritzel 11, und eine zweite Verbindungsvorrichtung 5 mit dem drehbaren Lenkungsteil 6 lösbar verbunden und/oder gekoppelt. Die zweite Verbindungsvorrichtung 5 ist als erstes Zahnrad ausgebildet.

Gemäß dieser Ausführungsform ist vorgesehen, dass das erste Maschinenelement 8 mithilfe einer Verbindungsplatte mit einer Aufnahmeöffnung 13 verbunden ist, wobei die Aufnahmeöffnung 13 zur formschlüssigen Aufnahme der zweiten Verbindungsvorrichtung 5 eingerichtet ist.

Beim Einbau der Lenkvorrichtung 1 wird durch die Verbindung der Lenkvorrichtung 1 mit der Lenkung das erste Zahnrad in der Aufnahmeöffnung 13 angeordnet, sodass der drehbare Lenkungsteil 6 formschlüssig mit dem Lenkrad 2 verbunden ist. Dadurch sind Drehungen des Lenkrades 2 auf den drehbaren Lenkungsteil 6 übertragbar.

Das Lenkvorrichtungsgehäuse 4 ist über eine erste Verbindungsvorrichtung 12 mit dem starren Lenkungsteil verbunden. Gemäß dieser Ausführungsform ist die erste Verbindungsvorrichtung 12 als Schnellkupplung ausgebildet.

Gemäß dieser Ausführungsform kann für den Ausbau der Lenkvorrichtung 1 nach dem Lösen der Schnellkupplung die Lenkvorrichtung 1 von dem ersten Zahnrad abgenommen werden.

Die Lenkvorrichtung 1 umfasst mindestens einen Lenkvorrichtungsteil, wie insbesondere mindestens einen Lenksensor, mindestens eine Antenne, mindestens eine Steuervorrichtung und/oder mindestens eine Batterie, welcher zur besseren Ersichtlichkeit nicht dargestellt ist. Die Lenkvorrichtungsteile sind ausschließlich mit dem Lenkvorrichtungsgehäuse 4 verbunden, sodass diese bei einer Drehung des Lenkrads 2 unbewegt bleiben.

Ferner umfasst die Lenkvorrichtung 1 fünf Bedienungsvorrichtungen 17, nämlich vier Knöpfe und einen Touchscreen, wobei der Touchscreen aber zur besseren Ersichtlichkeit nicht dargestellt ist. Die Bedienungsvorrichtungen 17 sind alle mit dem starren Lenkungsteil 7 verbunden und an dem Lenkvorrichtungsgehäuse 4 angeordnet. Ferner sind die Bedienungsvorrichtungen 17 zur Bedienung der Lenkvorrichtung 1 und/oder des Fahrzeugs eingerichtet. Der nicht dargestellte Touchscreen zeigt in Richtung des Fahrzeugführers.

Dadurch, dass die Lenkvorrichtung 1 und somit auch die Bedienungsvorrichtungen 17 im Wesentlichen in der Mitte des Lenkrades 2 zentral vor dem Fahrzeugführer angeordnet sind, wird kein zusätzlicher Platz im Fahrzeug benötigt.

Überdies sind die Bedienungsvorrichtungen 17 mit dem starren Lenkungsteil 7 verbunden, wodurch diese bei einer Drehung des Lenkrades 2 unbewegt bleiben. Dadurch ist ein einfaches Ablesen und Bedienen der Lenkvorrichtung 1 jederzeit möglich.

Die Lenkvorrichtung 1 weist gemäß dieser Ausführungsform ein Verbindungselement, nämlich einen Stecker auf, wodurch die Lenkvorrichtung 1 mit dem Fahrzeug, der Batterie und/oder einer GNSS-/GPS-Empfangsvorrichtung verbindbar ist.

Die zu dem Verbindungselement führende Leitung ist an dem Lenkvorrichtungsgehäuse 4 und gegebenenfalls an der ersten Verbindungsvorrichtung 12 angeordnet, sodass die Leitung während der Drehung des Lenkrades 2 und des drehbaren Lenkungsteils 6 unbewegt bleibt. Das Verbindungselement und die Leitung sind zur besseren Ersichtlichkeit nicht dargestellt.

Diese Konfiguration kann in allen Ausführungsformen vorgesehen sein.

Durch diese beispielhafte Konfiguration können die erfindungsgemäßen Effekte erzielt werden.

Die Erfindung beschränkt sich nicht auf die dargestellten Ausführungsformen, sondern umfasst jegliche Anordnung, jegliche Lenkvorrichtung 1, jegliches Lenkrad 2 und jegliches Fahrzeug gemäß den nachfolgenden Patentansprüchen.

## Patentansprüche

1. Anordnung einer Lenkvorrichtung (1) an einer Lenkung eines Fahrzeuges,
- wobei die Lenkung einen starren Lenkungsteil (7) und einen drehbaren Lenkungsteil (6), insbesondere eine Lenksäule, umfasst,
- wobei durch die Drehung des drehbaren Lenkungsteils (6) die Stellung von mindestens einem Fahrzeugrad einstellbar ist,
- und wobei der drehbare Lenkungsteil (6) relativ zu dem starren Lenkungsteil (7) verdreht werden kann,
- wobei die Lenkvorrichtung (1) ein Lenkrad (2) umfasst,
- wobei die Lenkvorrichtung (1) mit dem starren Lenkungsteil (7) und dem drehbaren Lenkungsteil (6) verbunden, insbesondere lösbar verbunden, ist,
- wobei die Lenkvorrichtung (1) einen zur Drehung des drehbaren Lenkungsteils (6) eingerichteten Motor (3) umfasst,
- wobei das Lenkrad über ein Getriebe (18) mit dem drehbaren Lenkungsteil gekoppelt ist,
- wobei das Getriebe (18) ein mit dem drehbaren Lenkungsteil (6) drehverbundenes, insbesondere als Zahnrad ausgebildetes, erstes Maschinenelement (8) umfasst,
- wobei das Getriebe (18) ein mit dem Lenkrad (2) drehverbundenes, insbesondere als Zahnrad ausgebildetes, zweites Maschinenelement (9) umfasst,
- wobei das erste Maschinenelement (8) mit dem zweiten Maschinenelement (9) über ein, insbesondere als Zahnrad ausgebildetes, um eine Drehachse (14) drehbar gelagertes drittes Maschinenelement (19) gekoppelt ist,
- **und** wobei die Drehachse (14) des dritten Maschinenelements (19) starr relativ zum starren Lenkungsteil (7) angeordnet ist
**dadurch gekennzeichnet,**
- **dass** das erste Maschinenelement (8) und das zweite Maschinenelement (9), konzentrisch angeordnet sind,
- **dass** das erste Maschinenelement (8) im Wesentlichen dem zweiten Maschinenelement (9) entspricht,
- **dass** die Drehachsen des ersten Maschinenelements (8) und des zweiten Maschinenelements (9) im Wesentlichen der Drehachse des drehbaren Lenkungsteils (16) entsprechen,
- **und dass** sich das erste Maschinenelement (8) und das zweite Maschinenelement (9) im Wesentlichen orthogonal zu der Drehachse des drehbaren Lenkungsteils (16) erstrecken.

2. Anordnung nach Anspruch 1, **dadurch gekennzeichnet,**
- **dass** die Lenkvorrichtung (1) ein Lenkvorrichtungsgehäuse (4) umfasst,
- **dass** das Lenkvorrichtungsgehäuse (4) mit dem starren Lenkungsteil (7) verbunden, insbesondere lösbar verbunden, ist,
- **dass** sich das Lenkvorrichtungsgehäuse (4) zumindest teilweise zwischen dem ersten (8) und dem zweiten Maschinenelement (9) erstreckt,
- **und dass** gegebenenfalls das dritte Maschinenelement (19), insbesondere eine Motorwelle oder ein Motorritzel (11), durch das Lenkvorrichtungsgehäuse (4) ragt und das erste (8) und das zweite Maschinenelement (9) verbindet.

3. Anordnung nach einem der vorangegangenen Ansprüche, **dadurch gekennzeichnet,**
- **dass** die Drehachse des dritten Maschinenelements (19) im Wesentlichen parallel oder orthogonal zu der Drehachse des drehbaren Lenkungsteils (16) verläuft,
- **und/oder dass** die Drehachse des Lenkrades (15) im Wesentlichen der Drehachse des drehbaren Lenkungsteils (16) entspricht.

4. Anordnung nach einem der vorangegangenen Ansprüche, **dadurch gekennzeichnet,**
- **dass** die Lenkvorrichtung (1) mindestens einen Lenkvorrichtungsteil, wie insbesondere mindestens einen Lenksensor, mindestens eine Antenne, mindestens eine Steuervorrichtung und/oder mindestens eine Batterie, umfasst,
- **und dass** der mindestens eine Lenkvorrichtungsteil, insbesondere ausschließlich, mit dem Lenkvorrichtungsgehäuse (4) verbunden ist.

5. Anordnung nach einem der vorangegangenen Ansprüche, **dadurch gekennzeichnet,**
- **dass** der drehbare Lenkungsteil (6) von dem starren Lenkungsteil (7) umgeben ist,
- **und/oder dass** sich der starre Lenkungsteil (7) im Wesentlichen parallel zur Drehachse des drehbaren Lenkungsteils (6) erstreckt,
- **und/oder dass** der drehbare Lenkungsteil (6), insbesondere die Lenksäule, in dem starren Lenkungsteil (7) angeordnet ist.

6. Anordnung nach einem der vorangegangenen Ansprüche, **dadurch gekennzeichnet,**
- **dass** die Lenkvorrichtung (1) mindestens eine Bedienungsvorrichtung (17), wie insbesondere einen Touchscreen und/oder einen Knopf, umfasst,
- **dass** die mindestens eine Bedienungsvorrichtung (17), insbesondere über das Lenkvorrichtungsgehäuse (4), mit dem starren Lenkungsteil (7) verbunden ist, wodurch die mindestens eine Bedienungsvorrichtung (17) während der Drehung des Lenkrades (2) und des drehbaren Lenkungsteils (6) unbewegt ist,
- **dass** gegebenenfalls die mindestens eine Bedienungsvorrichtung (17) im Wesentlichen orthogonal zu der Drehachse des drehbaren Lenkungsteils (16) angeordnet ist,
- **und dass** die mindestens eine Bedienungsvorrichtung (17) zur Bedienung der Lenkvorrichtung (1) und/oder des Fahrzeugs eingerichtet ist.

7. Anordnung nach einem der vorangegangenen Ansprüche, **dadurch gekennzeichnet, dass** die Lenkvorrichtung (1) abnehmbar ausgebildet ist, wodurch eine Entfernung der Lenkvorrichtung (1) von der Lenkung, insbesondere von dem starren (7) und dem drehbaren Lenkungsteil (6), möglich ist.

8. Anordnung nach einem der vorangegangenen Ansprüche, **dadurch gekennzeichnet,**
- **dass** an dem starren Lenkungsteil (7) kraft-, form- und/oder stoffschlüssig eine erste Verbindungsvorrichtung (12), insbesondere eine Schnellkupplung, angeordnet ist,
- **und dass** das Lenkvorrichtungsgehäuse (4) über die erste Verbindungsvorrichtung (12) mit dem starren Lenkungsteil (7) verbunden, insbesondere lösbar verbunden, ist.

9. Anordnung nach einem der vorangegangenen Ansprüche, **dadurch gekennzeichnet,**
- **dass** an dem drehbaren Lenkungsteil (6) kraft-, form- und/oder stoffschlüssig eine zweite Verbindungsvorrichtung (5), insbesondere ein Zahnrad, angeordnet ist,
- **und dass** das erste Maschinenelement (8), das dritte Maschinenelement (19), das zweite Maschinenelement (9) und/oder das Lenkrad (2) über die zweite Verbindungsvorrichtung (5) mit dem drehbaren Lenkungsteil (6) verbunden, insbesondere lösbar verbunden, ist oder sind.

10. Anordnung nach einem der vorangegangenen Ansprüche, **dadurch gekennzeichnet,**
- **dass** die Lenkvorrichtung (1) über ein Verbindungselement, insbesondere einen Stecker, mit dem Fahrzeug, einer Batterie und/oder einer GNSS-/GPS-Empfangsvorrichtung verbunden, insbesondere lösbar verbunden, ist,
- **und dass** die mindestens eine zu dem Verbindungselement führende Leitung mit dem Lenkvorrichtungsgehäuse (4) und gegebenenfalls mit der ersten Verbindungsvorrichtung (12) verbunden ist, wodurch die mindestens eine Leitung während der Drehung des Lenkrades (2) und des drehbaren Lenkungsteils (6) unbewegt ist.

11. Anordnung nach einem der vorangegangenen Ansprüche, **dadurch gekennzeichnet, dass** das Fahrzeug eine landwirtschaftliche Maschine, wie insbesondere ein Traktor, ein Mähdrescher oder ein Frontlader ist.

12. Lenkvorrichtung (1), **dadurch gekennzeichnet, dass** die Lenkvorrichtung (1) zur Verwendung in der Anordnung gemäß einem der Patentansprüche 1 bis 11 eingerichtet ist.

13. Lenkrad (2), **dadurch gekennzeichnet, dass** das Lenkrad (2) zur Verbindung mit dem starren Lenkungsteil (7), insbesondere der zweiten Verbindungsvorrichtung (5), der Anordnung gemäß einem der Patentansprüche 1 bis 11 eingerichtet ist.

14. Fahrzeug, **dadurch gekennzeichnet, dass** das Fahrzeug eine Anordnung gemäß einem der Patentansprüche 1 bis 11 umfasst.

## Claims

1. An arrangement of a steering device (1) on a steering system of a vehicle,
- wherein the steering system comprises a rigid steering part (7) and a rotatable steering part (6), in particular a steering column,
- wherein the position of at least one vehicle wheel can be adjusted by rotating the rotatable steering part (6),
- and wherein the rotatable steering part (6) can be rotated relative to the rigid steering part (7),
- wherein the steering device (1) comprises a steering wheel (2),
- wherein the steering device (1) is connected, in particular releasably, to the rigid steering part (7) and the rotatable steering part (6),
- wherein the steering device (1) comprises a motor (3), which is configured to rotate the rotatable steering part (6),
- wherein the steering wheel is coupled to the rotatable steering part via a transmission (18),
- wherein the transmission (18) comprises a first machine element (8), which is rotationally connected to the rotatable steering part (6) and is in particular formed as a toothed wheel,
- wherein the transmission (18) comprises a second machine element (9), which is rotationally connected to the steering wheel (2) and is in particular formed as a toothed wheel,
- wherein the first machine element (8) is coupled to the second machine element (9) via a third machine element (19), which is in particular formed as a toothed wheel and which is mounted rotatably about an axis of rotation (14),
- **and** wherein the axis of rotation (14) of the third machine element (19) is arranged rigidly relative to the rigid steering part (7),
**characterised**
- **in that** the first machine element (8) and the second machine element (9) are arranged concentrically,
- **in that** the first machine element (8) substantially corresponds to the second machine element (9),
- **in that** the axes of rotation of the first machine element (8) and the second machine element (9) substantially correspond to the axis of rotation of the rotatable steering part (16),
- **and in that** the first machine element (8) and the second machine element (9) extend substantially orthogonally to the axis of rotation of the rotatable steering part (16).

2. The arrangement according to claim 1, **characterised**
- **in that** the steering device (1) comprises a steering device housing (4),
- **in that** the steering device housing (4) is connected, in particular releasably, to the rigid steering part (7),
- **in that** the steering device housing (4) extends at least partially between the first (8) and the second machine element (9),
- **and in that,** optionally, the third machine element (19), in particular a motor shaft or a motor pinion (11), protrudes through the steering device housing (4) and connects the first (8) and the second machine element (9).

3. The arrangement according to one of the preceding claims, **characterised**
- **in that** the axis of rotation of the third machine element (19) extends substantially parallel or orthogonally to the axis of rotation of the rotatable steering part (16),
- **and/or in that** the axis of rotation of the steering wheel (15) substantially corresponds to the axis of rotation of the rotatable steering part (16).

4. The arrangement according to one of the preceding claims, **characterised**
- **in that** the steering device (1) comprises at least one steering device part, such as in particular at least one steering sensor, at least one antenna, at least one control device and/or at least one battery,
- **and in that** the at least one steering device part is connected, in particular exclusively, to the steering device housing (4).

5. The arrangement according to one of the preceding claims, **characterised**
- **in that** the rotatable steering part (6) is surrounded by the rigid steering part (7),
- **and/or in that** the rigid steering part (7) substantially extends parallel to the axis of rotation of the rotatable steering part (6),
- **and/or in that** the rotatable steering part (6), in particular the steering column, is arranged inside the rigid steering part (7).

6. The arrangement according to one of the preceding claims, **characterised**
- **in that** the steering device (1) comprises at least one operating device (17), such as in particular a touch screen and/or a button,
- **in that** the at least one operating device (17) is connected to the rigid steering part (7), in particular via the steering device housing (4), whereby the at least one operating device (17) is immobile during the rotation of the steering wheel (2) and the rotatable steering part (6),
- **in that** optionally the at least one operating device (17) is arranged substantially orthogonally to the axis of rotation of the rotatable steering part (16),
- **and in that** the at least one operating device (17) is configured to operate the steering device (1) and/or the vehicle.

7. The arrangement according to one of the preceding claims, **characterised in that** the steering device (1) is designed to be removable, which enables the removal of the steering device (1) from the steering system, in particular from the rigid (7) and the rotatable steering part (6).

8. The arrangement according to one of the preceding claims, **characterised**
- **in that** a first connecting device (12), in particular a quick coupling, is arranged on the rigid steering part (7) in a force-fitting, form-fitting and/or material-fitting manner,
- **and in that** the steering device housing (4) is connected, in particular releasably, to the rigid steering part (7) via the first connecting device (12).

9. The arrangement according to one of the preceding claims, **characterised**
- **in that** a second connecting device (5), in particular a toothed wheel, is arranged on the rotatable steering part (6) in a force-fitting, form-fitting and/or material-fitting manner,
- **and in that** the first machine element (8), the third machine element (19), the second machine element (9) and/or the steering wheel (2) is or are connected, in particular releasably, to the rotatable steering part (6) via the second connecting device (5).

10. The arrangement according to one of the preceding claims, **characterised**
- **in that** the steering device (1) is connected, in particular releasably, to the vehicle, a battery and/or a GNSS/GPS receiving device via a connecting element, in particular a plug,
- **and in that** the at least one line leading to the connecting element is connected to the steering device housing (4) and optionally to the first connecting device (12), whereby the at least one line is immobile during the rotation of the steering wheel (2) and the rotatable steering part (6).

11. The arrangement according to one of the preceding claims, **characterised in that** the vehicle is an agricultural machine, such as in particular a tractor, a combine harvester, or a front loader.

12. A steering device (1), **characterised in that** the steering device (1) is configured to be used in the arrangement according to one of claims 1 to 11.

13. A steering wheel (2), **characterised in that** the steering wheel (2) is configured to be connected to the rigid steering part (7), in particular the second connecting device (5), of the arrangement according to one of claims 1 to 11.

14. A vehicle, **characterised in that** the vehicle comprises an arrangement according to one of claims 1 to 11.

## Revendications

1. Agencement d'un système de direction (1) monté sur la direction d'un véhicule,
- la direction comprenant une partie fixe (7) de direction et une partie rotative (6) de direction, en particulier une colonne de direction,
- la rotation de la partie rotative (6) de direction permettant de régler la position d'au moins une roue du véhicule,
- et la partie rotative (6) de direction étant apte à être tournée par rapport à la partie fixe (7) de direction,
- le système de direction (1) comprenant un volant (2),
- le système de direction (1) étant relié, en particulier de manière amovible, à la partie fixe (7) de direction et à la partie rotative (6) de direction,
- le système de direction (1) comprenant un moteur (3) conçu pour faire tourner la partie rotative (6) de direction,
- le volant étant relié à la partie de direction rotative par l'intermédiaire d'un engrenage (18),
- l'engrenage (18) comprenant un premier élément mécanique (8) relié en rotation à la partie rotative (6) de direction, en particulier sous la forme d'une roue dentée,
- l'engrenage (18) comprenant un deuxième élément mécanique (9) relié en rotation au volant (2), en particulier sous la forme d'une roue dentée,
- le premier élément mécanique (8) étant relié au deuxième élément mécanique (9) par l'intermédiaire d'un troisième élément mécanique (19) monté de manière rotative autour d'un axe de rotation (14), en particulier sous la forme d'une roue dentée,
- **et** l'axe de rotation (14) du troisième élément mécanique (19) étant agencé de manière rigide par rapport à la partie fixe (7) de direction,
**caractérisé**
- **en ce que** le premier élément mécanique (8) et le deuxième élément mécanique (9) sont agencés de manière concentrique,
- **en ce que** le premier élément mécanique (8) correspond essentiellement au deuxième élément mécanique (9),
- **en ce que** les axes de rotation du premier élément mécanique (8) et du deuxième élément mécanique (9) correspondent essentiellement à l'axe de rotation de la partie rotative (16) de direction,
- et **en ce que** le premier élément mécanique (8) et le deuxième élément mécanique (9) s'étendent essentiellement de manière orthogonale par rapport à l'axe de rotation de la partie rotative (16) de direction.

2. Agencement selon la revendication 1, **caractérisé**
- **en ce que** le système de direction (1) comprend un boîtier (4) de système de direction,
- **en ce que** le boîtier (4) de système de direction est relié à la partie fixe (7) de direction, en particulier de manière amovible,
- **en ce que** le boîtier (4) de système de direction s'étend au moins partiellement entre le premier élément mécanique (8) et le deuxième élément mécanique (9),
- **et en ce que,** si applicable, le troisième élément mécanique (19), en particulier un arbre moteur ou un pignon moteur (11), traverse le boîtier (4) de système de direction et relie le premier élément mécanique (8) et le deuxième élément mécanique (9).

3. Agencement selon l'une des revendications précédentes, **caractérisé**
- **en ce que** l'axe de rotation du troisième élément mécanique (19) est essentiellement parallèle ou orthogonal à l'axe de rotation de la partie rotative (16) de direction,
- **et/ou en ce que** l'axe de rotation du volant (15) correspond essentiellement à l'axe de rotation de la partie rotative (16) de direction.

4. Agencement selon l'une des revendications précédentes, **caractérisé**
- **en ce que** le système de direction (1) comprend au moins une partie de système de direction, telle qu'en particulier au moins un capteur de direction, au moins une antenne, au moins un dispositif de commande et/ou au moins une batterie,
- **et en ce que** ladite au moins une partie de système de direction est reliée, en particulier exclusivement, au boîtier (4) de système de direction.

5. Agencement selon l'une des revendications précédentes, **caractérisé**
- **en ce que** la partie rotative (6) de direction est entourée par la partie fixe (7) de direction,
- **et/ou en ce que** la partie fixe (7) de direction s'étend sensiblement parallèlement à l'axe de rotation de la partie rotative (6) de direction,
- **et/ou en ce que** la partie rotative (6) de direction, en particulier la colonne de direction, est agencée dans la partie fixe (7) de direction.

6. Agencement selon l'une des revendications précédentes, **caractérisé**
- **en ce que** le système de direction (1) comprend au moins un dispositif de commande (17), tel qu'en particulier un écran tactile et/ou un bouton,
- **en ce que** ledit au moins un dispositif de commande (17) est relié à la partie fixe (7) de direction, en particulier par l'intermédiaire du boîtier (4) du système de direction, ce qui fait que ledit au moins un dispositif de commande (17) est immobile pendant la rotation du volant (2) et de la partie rotative (6) de direction,
- **en ce que,** si applicable, ledit au moins un dispositif de commande (17) est agencé de manière essentiellement orthogonale à l'axe de rotation de la partie rotative (16) de direction,
- **et en ce que** ledit au moins un dispositif de commande (17) est conçu pour commander le système de direction (1) et/ou le véhicule.

7. Agencement selon l'une des revendications précédentes, **caractérisé en ce que** le système de direction (1) est conçu de manière amovible, ce qui permet de retirer le système de direction (1) de la direction, en particulier de la partie fixe (7) de direction et de la partie rotative (6) de direction.

8. Agencement selon l'une des revendications précédentes, caractérisé
- **en ce qu**'un premier dispositif de liaison (12), en particulier un raccord rapide, est agencé sur la partie fixe (7) de direction par adhérence, par conjugaison de formes et/ou par liaison par de la matière,
- **et en ce que** le boîtier (4) du système de direction est relié, en particulier de manière amovible, à la partie fixe (7) de direction par le premier dispositif de liaison (12).

9. Agencement selon l'une des revendications précédentes, caractérisé
- **en ce qu**'un deuxième dispositif de liaison (5), en particulier une roue dentée, est agencé sur la partie rotative (6) de direction par adhérence, par conjugaison de formes et/ou par liaison par de la matière,
- **et en ce que** le premier élément mécanique (8), le troisième élément mécanique (19), le deuxième élément mécanique (9) et/ou le volant (2) sont reliés, en particulier de manière amovible, à la partie rotative (6) de direction par l'intermédiaire du deuxième dispositif de liaison (5).

10. Agencement selon l'une des revendications précédentes, **caractérisé**
- **en ce que** le système de direction (1) est relié, en particulier de manière amovible, au véhicule, à une batterie et/ou à un dispositif de réception GNSS/GPS, par l'intermédiaire d'un élément de liaison, en particulier d'une fiche,
- **et en ce que** ledit au moins un câble menant à l'élément de liaison est relié au boîtier (4) du système de direction et, si applicable, au premier dispositif de liaison (12), ce qui permet de maintenir ledit au moins un câble immobile pendant la rotation du volant (2) et de la partie rotative (6) de direction.

11. Agencement selon l'une des revendications précédentes, **caractérisé en ce que** le véhicule est une machine agricole, telle qu'en particulier un tracteur, une moissonneuse-batteuse ou un chargeur frontal.

12. Système de direction (1), **caractérisé en ce que** le système de direction (1) est conçu de façon à être utilisé dans l'agencement selon l'une des revendications 1 à 11.

13. Volant (2), **caractérisé en ce que** le volant (2) est conçu pour être relié à la partie fixe (7) de direction, en particulier au deuxième dispositif de liaison (5), de l'agencement selon l'une des revendications 1 à 11.

14. Véhicule, **caractérisé en ce que** le véhicule comprend un agencement selon l'une des revendications 1 à 11.
